# EUROPÄISCHE PATENTSCHRIFT

(11) **EP 0 401 320 B1**
(45) Veröffentlichungstag und Bekanntmachung des Hinweises auf die Patenterteilung: **16.02.1994**
(21) Anmeldenummer: 89912410.1
(22) Anmeldetag: 10.11.1989
(51) Int. Cl.: F04B 11/00

(54) **HYDRAULIKPUMPE**
HYDRAULIC PUMP
POMPE HYDRAULIQUE

(30) Priorität: 17.12.1988 DE 3842602; 20.04.1989 DE 3912937
(43) Veröffentlichungstag der Anmeldung: 12.12.1990
(73) Patentinhaber: ITT Automotive Europe GmbH, 60488 Frankfurt (DE)
(72) Erfinder: BUDECKER, Ludwig, D-6000 Frankfurt am Main (DE); DAVID, Anton, D-6071 Götzenhain (DE); OBERSTEINER, Georg, D-6240 Köningstein (DE); GUSE, Hans-A., D-6380 Bad Homburg (DE); ZUTT, Ulrich, D-6272 Niedernhausen (DE); SCHWEIGHÖFER, Bernd, D-6384 Schmitten (DE)
(86) Internationale Anmeldenummer: EP8901342
(87) Internationale Veröffentlichungsnummer: WO9007060

(56) Entgegenhaltungen:
- DE-C- 3 044 082
- US-A- 4 721 444

## Beschreibung

Die Erfindung betrifft eine Dämpfungseinrichtung für hydraulische Verdrängerpumpen nach dem Oberbegriff des Patentanspruches 1. Derartige Hydraulikpumpen erzeugen durch den stoßartigen Antrieb des Verdrängerkolbens Druckpulsationen, die zudem unerwünschte Geräusche produzieren.

Derartige Pumpen dienen beispielsweise der Druckmittelversorgung von hydraulischen Bremsanlagen oder hydraulischen Hilfskraftlenkungen in Fahrzeugen. Die Dämpfungseinrichtung dient der Minderung von Druck- und Förderstrompulsationen. Dämpfungseinrichtungen werden sowohl zum Zwecke der Geräuschminderung als auch zur Vermeidung von Druckstößen in der zu betreibenden Anlage eingesetzt. Aus der DE-PS 32 09 296 ist eine derartige Pumpe bekannt, wobei jedoch die Dämpfungseinrichtung als zusätzliche, einen hohen Raumbedarf aufweisende, Dämpfungskammer mit einem eigenen Gehäuse und darin angeordneten Leiteinrichtungen ausgeführt ist.

Bei einer anderen bekannten Verdrängerpumpe (DE-AS 15 28 359) ist zur Dämpfung der Druckpulsation sowohl im Bereich des Saug- als auch im Bereich des Druckanschlusses ein elastisches Element angeordnet, welches ein Gasvolumen umschließt. Zwar lassen sich saugseitige Druckpulsationen durch den Einsatz eines eingeschlossenen, kompressiblen Gaspolsters befriedigend dämpfen, da sich die Druckpulsationen auf sehr niedrigem Druckniveau bewegen, jedoch läßt sich insbesondere bei Hochdruckpumpen im Druckbereich keine merkbare Pulsationsdämpfung mit dieser Anordnung erzielen, da das Gaspolster bei steigendem Druck sehr schnell sein Dämpfungsvermögen verliert.

Aus der US 4,721,444 ist eine Hydraulikpumpe mit in einem Zylinderblock angeordneten Arbeitskolben bekannt, bei der eine Dämpfungseinrichtung außerhalb dieses Zylinderblocks ausgebildet ist. Diese Dämpfungseinrichtung weist ein elastisches Mittel auf, das einerseits von einem mit unter Druck stehendes Gas gefüllten Raum begrenzt wird, und andererseits über eine mit Schlitzen versehene Wand mit einem Raum in Verbindung steht, der mit der Druckseite der Pumpe verbunden ist. Nachteilig an dieser Pumpe ist zum einen der komplizierte Aufbau der Dämpfungskammer, sowie die bereits oben beschriebene geringe Dämpfungswirkung eines eingeschlossenen, kompressiblen Gaspolsters auf der Hochdruckseite der Pumpe.

Der Erfindung liegt daher die Aufgabe zugrunde, eine gattungsgemäße Hydraulikpumpe zu schaffen, welche bei einfachem und kompaktem Aufbau eine besonders niedrige Druckpulsation sicherstellt und sich dabei durch eine besondere Robustheit auszeichnet.

Diese Aufgabe wird erfindungsgemäß durch die kennzeichnenden Merkmale des Anspruches 1 gelöst.

Bei einer bevorzugten Ausführungsform der Erfindung ist vorgesehen, daß der Kanal senkrecht zur Sackbohrung an den Ringraum angeschlossen ist. Dadurch wird eine starke Umlenkung des Förderstromes erreicht, womit der Dämpfungsgrad erhöht wird. Eine weitere Umlenkung des Druckmittelstromes kann dadurch erreicht werden, daß die Austrittsöffnungen radial aus dem Verschlußteil nach außen geführt sind.

Eine weitere Verbesserung der Dämpfungsqualität wird dadurch erreicht, daß die Austrittsöffnungen in einen im Zylinderblock ausgebildeten Sammelraum münden. Eine Ausführung der Erfindung mit besonders niedrigen Montageaufwand sieht vor, daß der Ringraum und Sammelraum durch die Verschraubung des Verschlußteiles voneinander getrennt sind.

Eine entscheidende Verbesserung der Dämpfung wird erreicht, wenn zwischen dem Auslaßventil und dem Pumpenauslaß elastische Mittel angeordnet sind.

Dadurch erreicht man eine Pulsationsdämpfung durch die elastische Verformung eines elastomeren Formteiles, welches unter Druckeinwirkung in einen Hohlram ausweicht. Es wird neben der Kompressibilität des Elastomeres vor allen Dingen die Eigenschaft genutzt, Formänderungsenergie aufzunehmen.

Die Charakteristik der Dämpfungseinrichtung kann durch die Formgebung des elastomeren Formteiles oder auch durch die Kontur der festen Wand, welche vorzugsweise am Pumpengehäuse oder an einem mit dem Pumpengehäuse verbundenen Verschlußstück ausgebildet ist, variiert werden.

Je nach gewünschter Feder- bzw. Dämpfungseigenschaft kann der Hohlraum ein eingeschlossenes Luftvolumen beinhalten oder mittels einer Atmosphärenbohrung an die Umgebung angeschlossen sein.

Besonders wirksam läßt sich die Dämpfungscharakteristik beeinflussen, wenn zwischen dem Formteil und der festen Wand ein Federelement vorgesehen ist. Die Wirkung des als Dämpfungskammer arbeitenden Druckraums läßt sich dadurch steigern; wenn zwischen dem Druckanschluß und dem Druckraum eine Drosselstelle vorgesehen ist.

Eine besonders vorteilhafte Ausführung der Erfindung sieht vor, daß die Dämpfungseinrichtung als komplett vormontierbare, integrierte Baueinheit ausgebildet ist, welche den Druckraum, das Formteil, die feste Wand, das Federelement, die Drosselstelle und das Rückschlagventil beinhaltet.

Weitere vorteilhafte Merkmale sowie die Funktion der Erfindung ergeben sich aus der nachstehenden Beschreibung von Ausführungsformen der Erfindung anhand der Zeichnung.

Hierzu zeigt:
- Fig. 1: ein erstes Ausführungsbeispiel einer erfindungsgemäßen Hydraulikpumpe, wobei im wesentlichen die Dämpfungseinrichtung dargestellt ist,
- Fig. 2: eine zweite Ausführungsform der Erfindung
- Fig. 3, Fig. 4 und Fig. 5: spezielle Ausführungen des Verschlußteils der Dämpfungseinrichtung gemäß der Erfindung

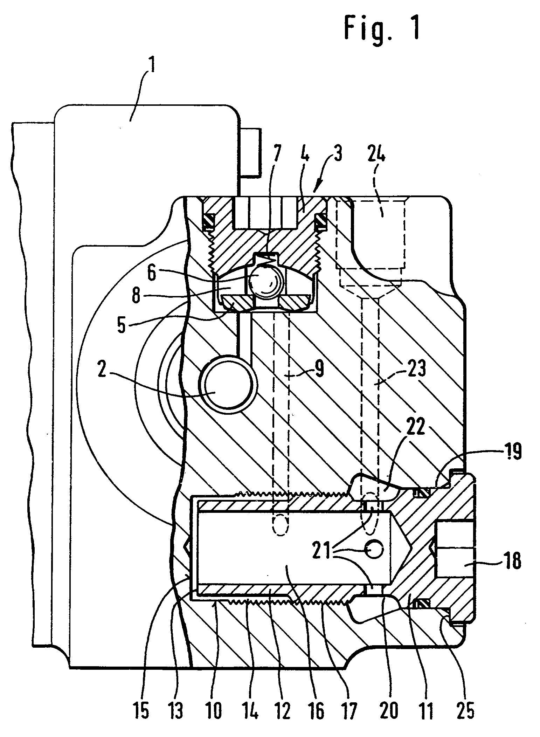

Die Figur 1 zeigt ein Ausführungsbeispiel der Erfindung als zweikreisige Radialkolbenpumpe, wobei die Arbeitskolben 2 durch einen nicht dargestellten Exzenter angetrieben werden. Die Arbeitskolben 2 sind im Zylinderblock 1 angeordnet; die Arbeitskammer eines jeden Kolbens ist mit einem Auslaßventil 3 verbunden, welches im Zylinderblock 1 verschraubt ist. Das Auslaßventil 3 ist als Rückschlagventil ausgebildet und setzt sich in bekannter Weise aus dem Ventilkörper 4, dem Ventilsitz 5, dem Schließglied 6 und der Ventilfeder 7 zusammen. An den ausgangsseitigen Ventilraum 8 des Auslaßventils 3 ist ein im Zylinderblock 1 integrierter Kanal 9 angeschlossen, der in einer Sackbohrung 10 mündet, deren Längsachse senkrecht zum Kanal 9 verläuft.

In die Sackbohrung 10 ist das Verschlußteil 11 eingeschraubt, dessen die Anschlußstelle des Kanals überdeckender Endabschnitt im Durchmesser abgesetzt ist. Dadurch wird im Bereich der Anschlußstelle des Kanals 9 ein Ringraum 14 gebildet. Die Stirnseite 13 des Endabschnitts 11 weist einen definierten Abstand zum Boden 15 der Sackbohrung 10 auf, wodurch ein Dämpfungsspalt gebildet wird. Durch eine axial verlaufende Ausnehmung in Form einer zentralen Sackbohrung ist im Verschlußteil 11 eine zur Stirnseite 13 hin geöffnete und mit dem Ringraum 14 verbundene Dämpfungskammer 16 ausgebildet. Etwa in der Mitte seiner axialen Erstreckung weist das Verschlußteil 11 einen Gewindeabschnitt 17 am Außenumfang auf.

Das der Stirnseite gegenüberliegende Ende des Verschlußteils 11 ist kopfartig erweitert und ist mit einem Innensechskant 18 versehen. Der sich an den Kopfabschnitt anschließende Bereich 19 ist mit einer Ringnut zur Aufnahme einer Dichtung versehen.

Der zwischen dem Gewindeabschnitt 17 und dem Bereich 19 des Verschlußteils 11 liegende Abschnitt 20 ist im Durchmesser etwas verjüngt und mit radialen Austrittsöffnungen 21 versehen. Diese Austrittsöffnungen 21 verbinden die Dämpfungskammer 16 mit einem Sammelraum 22, der durch eine umlaufende radiale Erweiterung der Sackbohrung 10 gebildet wird. An den Sammelraum 22 ist eine Verbindung 23 angeschlossen, die zum Pumpenausgang 24 führt. Falls die Pumpe mehrere Ausgänge besitzen soll, so ist es möglich, weitere Verbindungen vom Sammelraum 22 abzweigen zu lassen.

Bei Betrieb der Pumpe wird bei jedem Arbeitshub der Arbeitskolben 2 Druckmittel über das Auslaßventil 3 und den Kanal 9 in den Ringraum 14 gefördert, wobei der Druckmittelstrom umgelenkt und gedrosselt wird. Dies ist die erste Stufe zur Dämpfung der Druck- und Förderstrompulsationen. Beim Übergang von der Ringkammer 14 in die Dämpfungskammer 16 wird das Druckmittel nochmals im Dämpfungsspalt gedrosselt und umgelenkt. Eine weitere Umlenkung erfolgt beim Austritt in den Sammelraum 22 über die Austrittsöffnungen 21. Gegebenenfalls kann aber auch der Pumpenausgangsanschluß direkt im Verschlußteil 11 integriert sein.

Die Dämpfung des Druckmittelstroms läßt sich durch Anpassung der Differenz zwischen dem Außendurchmesser des Endabschnitts 12 und dem Durchmesser der Sackbohrung 10 auf die speziellen Anforderungen abstimmen. Eine weitere Abstimmungsmöglichkeit ist durch die Veränderung der Größe des Dämpfungsspalts zwischen der Stirnseite 13 und dem Boden 15 der Sackbohrung möglich. Diese Abstimmung läßt sich beispielsweise durch Anordnung von Unterlegscheiben zwischen dem Zylinderblock 1 und der Anlagefläche 25 des kopfförmigen Abschnitts des Verschlußteils 11 vornehmen.

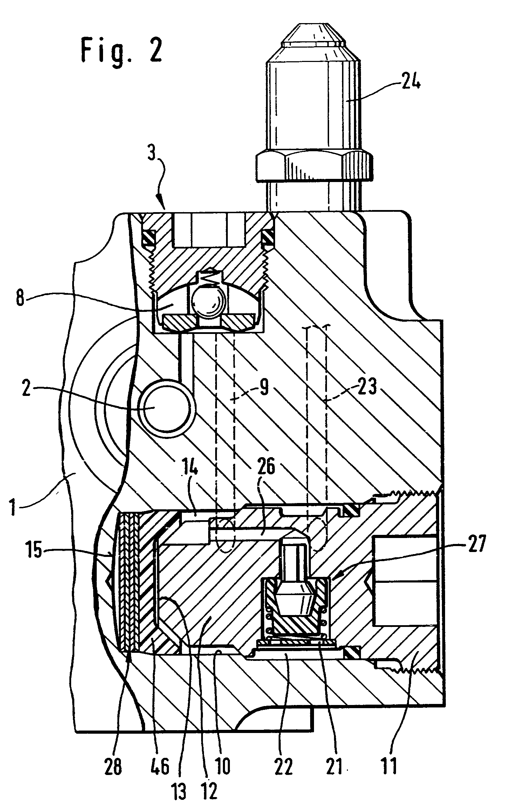

In Fig. 2 ist eine Radialkolbenpumpe im Schnitt dargestellt, deren Aufbau im wesentlichen dem der Radialkolbenpumpe gemäß Fig. 1 entspricht; es werden im Folgenden auch für einander entsprechende Elemente die gleichen Bezugszeichen gewählt. Der Kolben 2 der Radialkolbenpumpe fördert über das Auslaßventil 3 in den Kanal 9, der mit dem Ringraum 14 verbunden ist. Der Ringraum 14 wird durch das in die Sackbohrung 10 hineinragende Verschlußteil 11 gebildet, welches einen Kanal 26 aufweist, der den Ringraum 14 mit der Austrittsöffnung 21 verbindet. Die Austrittsöffnung 21 führt in den Sammelraum 22, der ringförmig ausgebildet ist und durch einen Bund des Verschlußteiles 11 vom Ringraum 14 getrennt ist.

Vom Sammelraum 22 führt eine Verbindung 23 zum Pumpenausgang 24. In dem Kanal 26 ist ein federbelastetes Rückschlagventil 27 angeordnet, welches die Strömungsrichtung vom Sammelraum 22 zum Ringraum 14 sperrt.

Zwischen dem Verschlußteil 11 und dem Boden 15 der Sackbohrung 10 ist ein elastomere Formteil 46 angeordnet; es ist manschettenförmig ausgebildet und liegt mit seiner dem Ringraum 14 abgewandten Stirnseite an einem Scheibenpaket 28 an, welches als Federelement dient um die Dämpfung der Druckpulsationen an die herrschenden Arbeitsdrücke anzupassen. Das Rückschlagventil 27 verhindert, daß sich die Elastizität des elastomeren Formteils 46, welches den Ringraum 14 begrenzt, auf den an den Pumpenausgang 24 angeschlossenen Arbeitskreis auswirkt.

Die Druckpulsationsdämpfung und damit die Geräuschminderung wird gemäß Fig. 2 sowohl durch Umlenken des Förderstroms als auch durch Deformation des elastischen Formteils erreicht, wobei zusätzlich Kammern unterschiedlichen Volumens durchströmt werden.

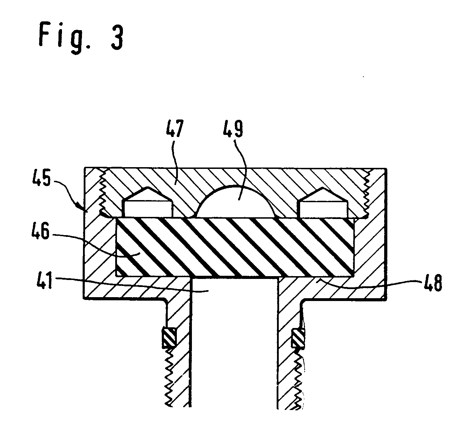

In Fig. 3 ist eine Ausführung des geschlossenen Abschnitts 45 des Verschlußteils 11 mit elastomerem Formteil 46 dargestellt.

Der Abschnitt 45 des Verschlußteils 11 umgibt den Druckraum 41 und das elastomere Formteil 46, welches durch den Deckel 47 des Abschnitts 45 druckdicht an eine ringförmige Anlagefläche 48 gedrückt ist.

Die beim Betrieb der Pumpe in der Druckkammer auftretenden Druckspitzen führen neben einem gewissen Komprimieren des elastomeren Formteiles, vor allen Dingen zu einer Verformung, welche sich dadurch ergibt, daß das elastomere Formteil 46 in den Hohlraum 49 ausweicht, welcher im Deckel 47 ausgebildet ist.

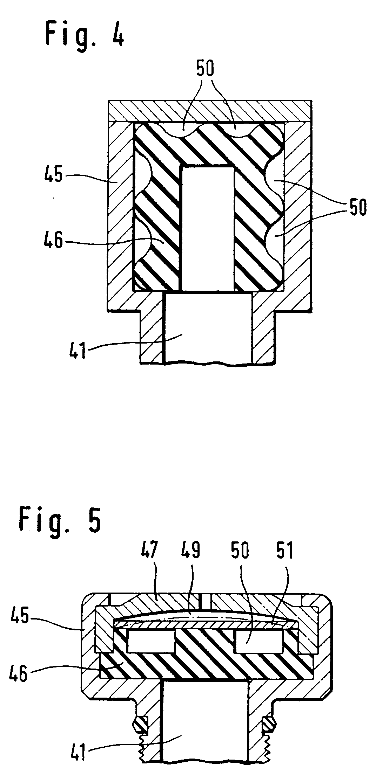

In Fig. 4 ist eine Ausführung des elastomeren Formteils 46 dargestellt, bei dem die Hohlräume durch Ausnehmungen 50 im Formteil 46 gebildet werden. Auf diese Weise läßt sich die mit einem höheren Fertigungsaufwand verbundene zusätzliche Bearbeitung des Verschlußteiles 45 einsparen. Die Ausnehmungen 50 im Formteil 46 können beispielsweise als umlaufende Ringnuten ausgeführt sein, auch eine Ausführung mit kugelkalottenförmigen Ausnehmungen ist leicht realisierbar. Die Ausführung gemäß Fig. 4 zeigt ein becherförmiges, elastomeres Formteil 46, wodurch der Druckraum 41 besonders kompakt ausgebildet werden kann, da das Verhältnis von dem Volumen des elastomeren Bauteiles 46 zur beaufschlagbaren Fläche sehr günstig ist.

Fig. 5 zeigt eine Ausführungsform der Erfindung, bei welcher zur besseren Anpassung der Dämpfungscharakteristik ein Federelement 51 im Hohlraum 49 angeordnet ist. Das elastomere Formteil 46 ist durch den Deckel 47, welcher durch eine Einscherung gesichert ist, im Abschnitt 45 des Verschlußteils 11 befestigt. Das elastomere Formteil 46 ist mit mehreren Ausnehmungen 50 versehen, und liegt mit seiner vom Druckraum 41 abgewandten Seite an einer federnden Platte 51 an. Auch ein anderes Federelement, beispielsweise eine Tellerfeder, ließe sich für diesen Zweck sehr gut anwenden. Durch geeignete Abstimmung der Steifigkeit des Federelementes und des elastomeren Formteiles läßt sich eine konstante Federcharakteristik über den gesamten Druckbereich erreichen, auch der Temperatureinfluß wird vernachlässigbar gering. Durch eine geeignete Abstimmung läßt es sich erreichen, daß das Federelement erst dann verformt wird, wenn der elastomere Block 46 sein Formänderungsvermögen erreicht hat. Der Abschnitt 45 des Verschlußteiles 11 ist als Sechskant ausgeführt, wodurch er mit einfachem Werkzeug in den Zylinderblock einschraubbar ist. Der Hohlraum 49 ist über eine Atmosphärenbohrung mit der Umgebung verbunden, so daß das eingeschlossene Luftvolumen die Verformung des elastomeren Formteiles 46 oder des Federelementes 51 nicht behindert. Wie auch bei den anderen Ausführungsbeispielen ist der Druckraum 41 durch das elastomere Formteil gegen das Gehäuse abgedichtet, so daß kein Druckmittel in die Hohlräume 49 bzw. Ausnehmungen 50 gelangen kann.

### Bezugszeichenliste

- 1: Zylinderblock
- 2: Arbeitskolben
- 3: Auslaßventil
- 4: Ventilkörper
- 5: Ventilsitz
- 6: Schließglied
- 7: Ventilfeder
- 8: Ventilraum
- 9: Kanal
- 10: Sackbohrung
- 11: Verschlußteil
- 12: Endabschnitt
- 13: Stirnseite
- 14: Ringraum
- 15: Boden
- 16: Dämpfungskammer
- 17: Gewindeabschnitt
- 18: Innensechskant
- 19: Bereich
- 20: Abschnitt
- 21: Austrittsöffnung
- 22: Sammelraum
- 23: Verbindung
- 24: Pumpenausgang
- 25: Anlagefläche
- 26: Kanal
- 27: Rückschlagventil
- 28: Scheibenpaket
- 41: Druckraum
- 45: Abschnitt
- 46: Elastomeres Formteil
- 47: Deckel
- 48: Ablagefläche
- 49: Hohlraum
- 50: Ausnehmung
- 51: Federelement

## Patentansprüche

1. Hydraulikpumpe mit mindestens einem in einem Zylinderblock (1) angeordneten Arbeitskolben (2), einem einer Arbeitskammer zugeordneten Auslaßventil (3) und einer Dämpfungseinrichtung, wobei im Zylinderblock (1) ein Kanal (9) von der Ausgangsseite (8) des Auslaßventils (3) zu einer im Zylinderblock (1) angeordneten Ausnehmung führt, **gekennzeichnet** durch folgende Merkmale
- die Ausnehmung ist als Sackbohrung (10) ausgebildet;
- der Kanal (9) mündet in einen in der Sackbohrung (10) vorgesehenen Ringraum (14), der durch einen mit radialem Spiel in die Sackbohrung (10) ragenden Endabschnitt (12) eines Verschlußteiles (11) gebildet ist;
- die Stirnseite (13) des Endabschnitts (12) weist einen axialen Abstand zum Boden (15) der Sackbohrung (10) auf;
- innerhalb des Verschlußteiles (11) ist eine zur Stirnseite (13) hin geöffnete Dämpfungskammer (16) vorgesehen;
- in einem von der Stirnseite (13) entfernten Bereich der Dämpfungskammer (16) ist mindestens eine Austrittsöffnung (21) vorgesehen.

2. Hydraulikpumpe nach Anspruch 1, dadurch **gekennzeichnet**, daß der Kanal (9) senkrecht zur Sackbohrung (10) an den Ringraum (14) angeschlossen ist.

3. Hydraulikpumpe nach einem der vorhergehenden Ansprüche, dadurch **gekennzeichnet**, daß die Austrittsöffnungen (21) radial aus dem Verschlußteil (11) geführt sind.

4. Hydraulikpumpe nach einem der vorhergehenden Ansprüche, dadurch **gekennzeichnet**, daß die Austrittsöffnungen (21) in einen im Zylinderblock (1) ausgebildeten Sammelraum (22) münden.

5. Hydraulikpumpe nach einem der vorhergehenden Ansprüche, dadurch **gekennzeichnet**, daß die Sackbohrung (10) mit einem Gewinde versehen ist, welches nahezu bis an ihren Boden (15) ausgeführt ist und daß der Außendurchmesser des Endabschnittes (12) geringfügig kleiner als der Kerndurchmesser dieses Gewindes ist.

6. Hydraulikpumpe nach Anspruch 5, dadurch **gekennzeichnet**, daß der Ringraum (14) und der Sammelraum (22) durch die Verschraubung des Verschlußteils (11) voneinander getrennt sind.

7. Hydraulikpumpe nach einem der vorhergehenden Ansprüche, dadurch **gekennzeichnet**, daß im Bereich zwischen dem Auslaßventil (3) und einem Pumpenausgang (24), insbesondere zwischen der Stirnseite (13) des Endabschnittes (12) und dem Boden (15) der Sacklochbohrung (10), pulsationsdämpfende elastische Mittel (28,46,51) angeordnet sind.

8. Hydraulikpumpe nach Anspruch 7, dadurch **gekennzeichnet**, daß die elastischen Mittel durch ein elastomeres Formteil (46) gebildet sind, welches mit seiner dem Ringraum (14) abgewandten Seite und einer festen Wand (15,10,45,47) mindestens einen Hohlraum (49,50) begrenzt.

9. Hydraulikpumpe nach einem der Ansprüche 1 bis 8, dadurch **gekennzeichnet**, daß das Verschlußteil (11) mit einem den Ringraum (14) mit der Austrittsöffnung (21) verbindenden Verbindungskanal (26) versehen ist, in dem ein vorzugsweise federbelastetes Rückschlagventil (27) angeordnet ist.

10. Hydraulikpumpe nach Anspruch 8 oder 9, dadurch **gekennzeichnet,** daß die Hohlräume durch Ausnehmungen (50) im elastomeren Formteil (46) gebildet werden.

11. Hydraulikpumpe nach einem der Ansprüche 8 bis 10, dadurch **gekennzeichnet,** daß die Hohlräume durch Ausnehmungen in der festen Wand (15) gebildet werden.

12. Hydraulikpumpe nach einem der Ansprüche 8 bis 11, dadurch **gekennzeichnet,** daß das Formteil (46) den Hohlraum (49, 50) gegenüber dem Druckraum (41) abdichtet.

13. Hydraulikpumpe nach einem der Ansprüche 8 bis 12, dadurch **gekennzeichnet,** daß der Hohlraum (49, 50) mit der Atmosphäre in Verbindung steht.

14. Hydraulikpumpe nach einem der Ansprüche 8 bis 13, dadurch **gekennzeichnet,** daß zwischen dem elastomeren Formteil (46) und der Wand (45,47,15) ein Federelement (51,28) vorgesehen ist.

15. Hydraulikpumpe nach einem der Ansprüche 8 bis 13, dadurch **gekennzeichnet,** daß ein Federelement (51) im elastomeren formteil (46) eingelagert ist.

16. Hydraulikpumpe nach einem der Ansprüche 8 bis 13, dadurch **gekennzeichnet,** daß ein Federelement (51) zwischen dem elastomeren Formteil (46) und dem Druckraum (41) vorgesehen ist.

17. Hydraulikpumpe nach einem der Ansprüche 14 bis 16, dadurch **gekennzeichnet,** daß das Federelement (51) vorgespannt ist.

18. Hydraulikpumpe nach einem der Ansprüche 8 bis 17, dadurch **gekennzeichnet,** daß zwischen dem Druckraum (41) und dem Druckanschluß eine Drosselstelle vorgesehen ist.

19. Hydraulikpumpe nach einem der Ansprüche 8 bis 18, dadurch **gekennzeichnet,** daß der Druckraum (41), das elastomere Formteil (46), die feste Wand (45, 47), das Federelement (51) und das Rückschlagventil (40) als integrierte, vormontierbare Einheit ausgebildet sind.

## Claims

1. A hydraulic pump with at least one power piston (2) accommodated in a cylinder block (1), with an outlet valve (3) associated with a power chamber, and with a damping device, a duct (9) in the cylinder block (1) leading from the outlet side (8) of the said outlet valve (3) to a recess positioned in the cylinder block (1),
**characterized** by the following features:
- the recess is formed in the shape of a blind-end bore (10);
- the duct (9) ends in an annular chamber (14) being provided in the blind-end bore (10), which annular chamber is formed by an end portion (12) of a closing element (11) which projects with radial play into the blind-end bore (10);
- the front side (13) of the end portion (12) has an axial distance from the bottom (15) of the blind-end bore (10);
- within the closing element (11), a damping chamber (16) is provided being open in the direction of the front side (13);
- at least one outlet opening (21) is provided in a range of the damping chamber (16) which is distant from the front side (13).

2. A hydraulic pump as claimed in claim 1,
**characterized** in that the duct (9) is connected to the annular chamber (14) square with the blind-end bore (10).

3. A hydraulic pump as claimed in any one of the preceding claims,
**characterized** in that the outlet openings (21) lead radially out of the closing element (11).

4. A hydraulic pump as claimed in any one of the preceding claims,
**characterized** in that the outlet openings (21) end in a collecting chamber (22) which is formed in the cylinder block (1).

5. A hydraulic pump as claimed in any one of the preceding claims,
**characterized** in that the blind-end bore (10) is furnished with a thread which reaches almost down to its bottom (15), and in that the external diameter of the end portion (12) is slightly smaller than the core diameter of that thread.

6. A hydraulic pump as claimed in claim 5,
**characterized** in that the annular chamber (14) and the collecting chamber (22) are divided from each other by the screw coupling of the closing element (11).

7. A hydraulic pump as claimed in any one of the preceding claims,
**characterized** in that pulsation-damping elastic means (28, 46, 51) are positioned in the range between the outlet valve (3) and a pump outlet (24), in particular between the front side (13) of the end portion (12) and the bottom (15) of the blind-end bore (10).

8. A hydraulic pump as claimed in claim 7,
**characterized** in that the elastic means are constituted by an elastomeric shaped element (46) which with its side facing away from the annular chamber (14) and jointly with a rigid wall (15, 10, 45, 47), confines at least one cavity (49, 50).

9. A hydraulic pump as claimed in any one of claims 1 to 8,
**characterized** in that the closing element (11) is provided with a connecting duct (26) which connects the annular chamber (14) with the outlet opening (21) and in which a preferably spring-loaded non-return valve (27) is arranged.

10. A hydraulic pump as claimed in claim 8 or in claim 9,
**characterized** in that the cavities are constituted by recesses (50) in the elastomeric shaped element (46).

11. A hydraulic pump as claimed in any one of claims 8 to 10,
**characterized** in that the cavities are constituted by recesses in the rigid wall (15).

12. A hydraulic pump as claimed in any one of claims 8 to 11,
**characterized** in that the shaped element (46) seals off the cavity (49, 50) in respect of the pressure chamber (41).

13. A hydraulic pump as claimed in any one of claims 8 to 12,
**characterized** in that the cavity (49, 50) is in connection with the atmosphere.

14. A hydraulic pump as claimed in any one of claims 8 to 13,
**characterized** in that a spring element (51, 28) is provided between the elastomeric shaped element (46) and the wall (45, 47, 15).

15. A hydraulic pump as claimed in any one of claims 8 to 13,
**characterized** in that a spring element (51) is embedded in the elastomeric shaped element (46).

16. A hydraulic pump as claimed in any one of claims 8 to 13,
**characterized** in that a spring element (51) is provided between the elastomeric element (46) and the pressure chamber (41).

17. A hydraulic pump as claimed in any one of claims 14 to 16,
**characterized** in that the spring element (51) is prestressed.

18. A hydraulic pump as claimed in any one of claims 8 to 17,
**characterized** in that a restriction point is provided between the pressure chamber (41) and the delivery-side connection.

19. A hydraulic pump as claimed in any one of claims 8 to 18,
**characterized** in that the pressure chamber (41), the elastomeric shaped element (46), the rigid wall (45, 47), the spring element (51), and the non-return valve (40) are provided in the shape of a pre-mountable integrated unit.

## Revendications

1. Pompe hydraulique comprenant au moins un piston de travail (2), disposé dans un bloc-cylindre (1), une valve de sortie (3), associée à une chambre de travail, et un dispositif d'amortissement, un conduit (9) menant, dans le bloc-cylindre (1), du côté de sortie (8) de la valve de sortie (3) à un évidement situé dans le bloc-cylindre (i), caractérisée par les particularités suivantes :
- l'évidement est réalisé sous la forme d'un alésage borgne (10),
- le conduit (9) débouche dans une chambre annulaire (14) qui est prévue dans l'alésage borgne (10) et qui est formée par une section extrême (12) d'une pièce de fermeture (11) qui fait saillie avec un jeu radial dans l'alésage borgne (10),
- la face frontale (13) de la section extrême (12) est située à distance du fond (15) de l'alésage borgne (10) dans le sens axial,
- une chambre d'amortissement 916), ouverte vers la face frontale (13), est prévue à l'intérieur de la pièce de fermeture (11),
- au moins une ouverture de sortie (21) est prévue dans une zone de la chambre d'amortissement (16) qui est éloignée de la face frontale (13).

2. Pompe hydraulique suivant la revendication 1, caractérisée en ce que le conduit (9) est raccordé à la chambre annulaire (14) perpendiculairement à l'alésage borgne (10).

3. Pompe hydraulique suivant l'une des revendications précédentes, caractérisée en ce que les ouvertures de sortie (21) sont orientées radialement vis-à-vis de la pièce de fermeture (11).

4. Pompe hydraulique suivant l'une des revendications précédentes, caractérisée en ce que les ouvertures de sortie (21) débouchent dans une chambre collectrice (22) ménagée dans le bloc-cylindre (1).

5. Pompe hydraulique suivant l'une des revendications précédentes, caractérisée en ce que l'alésage borgne (10) est pourvu d'un filetage qui est réalisé presque jusqu'à son fond (15) et en ce que le diamètre extérieur de la section extrême (12) est légèrement inférieur au diamètre de troncature de ce filetage.

6. Pompe hydraulique suivant la revendication 5, caractérisée en ce que la chambre annulaire (14) et la chambre collectrice (22) sont séparées l'une de l'autre par la partie de vissage de la pièce de fermeture (11).

7. Pompe hydraulique suivant l'une des revendications précédentes, caractérisée en ce que des moyens élastiques (28, 46, 51) amortissant les pulsations sont disposés dans la zone située entre la valve de sortie (3) et une sortie de pompe (24), notamment entre la face frontale (13) de la section extrême (12) et le fond (15) de l'alésage borgne (10).

8. Pompe hydraulique suivant la revendication 7, caractérisée en ce que les moyens élastiques sont constitués par une pièce élastomère conformée (46) qui délimite au moins une cavité (49, 50) par sa face située du côté opposé à la chambre annulaire (14) et par une paroi fixe (15, 10, 45, 47).

9. Pompe hydraulique suivant l'une des revendications 1 à 8, caractérisée en ce que la pièce de fermeture (11) est pourvue d'un conduit de liaison (26) qui fait communiquer la chambre annulaire (14) avec l'ouverture de sortie (21) et dans lequel est disposée une valve antiretour, de préférence soumise à la sollicitation d'un ressort.

10. Pompe hydraulique suivant l'une des revendications 8 et 9, caractérisée en ce que les cavités sont formées par des évidements (50) situés dans la pièce élastomère conformée (46).

11. Pompe hydraulique suivant l'une des revendications 8 à 10, caractérisée en ce que les cavités sont formées par des évidements situés dans la paroi fixe (15).

12. Pompe hydraulique suivant l'une des revendications 8 à 11, caractérisée en ce que la pièce conformée (46) assure l'étanchéité de la cavité (49, 50) vis-à-vis de la chambre de pression (41).

13. Pompe hydraulique suivant l'une des revendications 8 à 12, caractérisée en ce que la cavité (49, 50) communique avec l'atmosphère.

14. Pompe hydraulique suivant l'une des revendications 8 à 13, caractérisée en ce qu'un élément à action de ressort (51, 28) est prévu entre la pièce élastomère conformée (46) et la paroi (45, 47, 15).

15. Pompe hydraulique suivant l'une des revendications 8 à 13, caractérisée en ce qu'un élément à action de ressort (51) est inséré dans la pièce élastomère conformée (46).

16. Pompe hydraulique suivant l'une des revendications 8 à 13, caractérisée en ce qu'un élément à action élastique (51) est prévu entre la pièce élastomère conformée (46) et la chambre de pression (41).

17. Pompe hydraulique suivant l'une des revendications 14 à 16, caractérisée en ce que l'élément à action de ressort (51) est soumis à une précontrainte.

18. Pompe hydraulique suivant l'une des revendications 8 à 17, caractérisée en ce qu'un emplacement d'étranglement est prévu entre la chambre de pression (41) et le raccord de pression.

19. Pompe hydraulique suivant l'une des revendications 8 à 18, caractérisée en ce que la chambre de pression (41), la pièce élastomère conformée (46), la paroi fixe (45, 47), l'élément à action de ressort (51) et la valve antiretour (40) sont agencés sous la forme d'une unité intégrée pouvant être préassemblée.
